# EUROPEAN PATENT APPLICATION

(11) **EP 4 838 845 A1**
(43) Date of publication of application: **11.11.2026**
(21) Application number: 24921595.5
(22) Date of filing: 04.11.2024
(51) Int. Cl.: H04L 27/26

(54) **DATA TRANSMISSION METHOD, COMMUNICATION APPARATUS AND STORAGE MEDIUM**

(30) Priority: 01.02.2024 CN 202410158320
(71) Applicant: ZTE Corporation, Shenzhen, Guangdong 518057 (CN)
(72) Inventor: XIN, Yu, Shenzhen, Guangdong 518057 (CN); HUA, Jian, Shenzhen, Guangdong 518057 (CN); BAO, Tong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/129692
(87) International publication number: WO 2025/161571

(57) **Abstract**

Provided are a data transmission method, a communication apparatus and a storage medium. The data transmission method comprises: partitioning into N first sequences data to be transmitted, wherein among the N first sequences, M first sequences each corresponds to one single-carrier sub-band, and K first sequences each corresponds to one multi-carrier sub-band, N being a positive integer, M being a positive integer less than N, and K being equal to N-M; on the basis of the N first sequences, obtaining N second sequences, the N second sequences comprising sequences obtained by successively performing inverse Fourier transform and an operation of adding a cyclic prefix on the first sequences corresponding to the multi-carrier sub-bands and sequences obtained by not performing the operation of adding a cyclic prefix on the first sequences corresponding to the single-carrier sub-bands; on the basis of the N second sequences, obtaining a time domain data sequence; and transmitting the time domain data sequence on a transmission resource for the data to be transmitted.

## Description

The present disclosure claims priority to Chinese Patent Application No. 202410158320.3, filed on February 1, 2024, the entire contents of which are incorporated herein by reference.

### TECHNICAL FIELD

The present disclosure relates to the field of communication technologies, and in particular, to a data transmission method, a communication apparatus, and a storage medium.

### BACKGROUND

With the development of communication technologies, services of future sixth-generation mobile communication technology (6G) will use an extremely wide range of frequency bands and adopt a wide variety of deployment modes. Not only a multi-bandwidth channel is required, but also waveform schemes that satisfy different scenarios are needed. Implementing each waveform scheme independently would increase a cost of a base station/a terminal.

### SUMMARY

In an aspect, an embodiment of the present disclosure provides a data transmission method. The data transmission method includes:
dividing data to be transmitted into N first sequences; where among the N first sequences, M first sequences each correspond to a single-carrier subband, and K first sequences each correspond to a multi-carrier subband, where N is a positive integer, M is a positive integer less than N, and K is equal to N-M;
obtaining N second sequences based on the N first sequences, where the N second sequences includes sequences obtained by sequentially performing an inverse Fourier transform and a cyclic prefix adding operation on first sequences corresponding to multi-carrier subbands, and sequences obtained without performing an cyclic prefix adding operation on first sequences corresponding to single-carrier subbands;
obtaining a time-domain data sequence based on the N second sequences; and
transmitting the time-domain data sequence on a transmission resource for the data to be transmitted.

In another aspect, an embodiment of the present disclosure provides a data transmission apparatus. The data transmission apparatus includes: a processing module and a communication module;
the processing module is configured to divide data to be transmitted into N first sequences; where among the N first sequences, M first sequences each correspond to a single-carrier subband, and K first sequences each correspond to a multi-carrier subband, where N is a positive integer, M is a positive integer less than N, and K is equal to N-M;
the processing module is further configured to obtain N second sequences based on the N first sequences, where the N second sequences includes sequences obtained by sequentially performing an inverse Fourier transform and a cyclic prefix adding operation on first sequences corresponding to multi-carrier subbands, and sequences obtained without performing an cyclic prefix adding operation on first sequences corresponding to single-carrier subbands;
the processing module is further configured to obtain a time-domain data sequence based on the N second sequences; and
the communication module is configured to transmit the time-domain data sequence on a transmission resource for the data to be transmitted.

In another aspect, an embodiment of the present disclosure provides a communication apparatus. The communication apparatus includes: a memory and a processor; where the memory and the processor are coupled to each other; the memory is configured to store instructions executable by the processor; the processor, upon executing the instructions, implements the data transmission method according to any one of the above embodiments.

In another aspect, an embodiment of the present disclosure provides a computer-readable storage medium, where computer program instructions are stored on the computer-readable storage medium, and the computer program instructions, upon being executed on a computer (e.g., a communication apparatus or a signal transmission apparatus), implement the data transmission method according to any one of the above embodiments.

In another aspect, an embodiment of the present disclosure provides a computer program product, where the computer program product includes computer program instructions, the computer program instructions, upon being executed, implement the data transmission method according to any one of the above embodiments.

### BRIEF DESCRIPTION OF THE DRAWINGS

FIG. 1 is a schematic diagram of an architecture of a communication system according to some embodiments.
FIG. 2 is a flowchart of a data transmission method according to some embodiments.
FIG. 3 is a schematic diagram of a data transmission process according to some embodiments.
FIG. 4 is a schematic diagram of another data transmission process according to some embodiments.
FIG. 5 is a schematic diagram of yet another data transmission process according to some embodiments.
FIG. 6 is a schematic diagram of yet another data transmission process according to some embodiments.
FIG. 7 is a schematic diagram of yet another data transmission process according to some embodiments.
FIG. 8 is a schematic diagram of yet another data transmission process according to some embodiments.
FIG. 9 is a schematic diagram of yet another data transmission process according to some embodiments.
FIG. 10 is a schematic diagram of yet another data transmission process according to some embodiments.
FIG. 11 is a schematic diagram of yet another data transmission process according to some embodiments.
FIG. 12 is a schematic diagram of yet another data transmission process according to some embodiments.
FIG. 13 is a schematic diagram of a structure of a data transmission apparatus according to some embodiments.
FIG. 14 is a schematic diagram of a structure of a communication apparatus according to some embodiments.

### DETAILED DESCRIPTION

The technical solutions in the embodiments of the present disclosure will be described clearly and completely below with reference to the accompanying drawings in the embodiments of the present disclosure. However, the described embodiments are only some embodiments of the present disclosure, rather than all the embodiments. Based on the embodiments in the present disclosure, all other embodiments obtained by a person of ordinary skill in the art without making any creative effort shall belong to the protection scope of the present disclosure.

In the description of the present disclosure, unless otherwise specified, "/" means "or", for example, A/B may represent A or B. "And/or" herein is only a relationship describing associated objects, indicating that three relationships may exist. For example, A and/or B may indicate: only A, both A and B, or only B. In addition, "at least one" means one or more, and "multiple/plurality of" means two or more. Expressions such as "first", "second" etc., do not limit the number and execution order, and expressions such as "first", "second", etc., also do not limit the defined objects must be different from each other.

It should be noted that in the present disclosure, expressions such as "exemplarily" or "for example" are used to serve as examples, illustrations, or descriptions. Any embodiment or design solution described as "exemplarily" or "for example" in the present disclosure should not be interpreted as being more preferred or more advantageous than other embodiments or design solutions. To be specific, the usage of expressions such as "exemplarily" or "for example" is intended to present related concepts in a detailed manner.

Long term evolution (LTE) technology is a 4G wireless cellular communication technology. LTE adopts orthogonal frequency division multiplexing (OFDM) technology, and time-frequency resources composed of subcarriers and OFDM symbols constitute wireless physical time-frequency resources of the LTE system. Currently, the OFDM technology has been widely used in wireless communications. Due to the usage of cyclic prefix (CP), a CP-OFDM system can well solve a multipath delay problem and divide a frequency-selective channel into a set of parallel flat channels, which greatly simplifies a channel estimation method and provides high channel estimation accuracy. However, a performance of the CP-OFDM system is sensitive to a frequency offset and a time offset between adjacent subbands, which is mainly due to relatively large spectrum leakage of the system, thus easily causing inter-subband interference. Currently, the LTE system uses a guard interval in frequency domain, however, in this way, spectral efficiency is reduced. Therefore, new technologies are needed to suppress out-of-band leakage.

Fifth generation new radio (5G NR) communication technology still uses CP-OFDM as a basic waveform, and different subcarrier spacings may be used between two adjacent subbands, which will destroy an orthogonality between subcarriers and introduce a new interference problem. To solve the interference problem, a relatively direct method is to insert a guard bandwidth between two transmission bands with different subcarrier spacings, however, in this way, frequency resources would be wasted.

With the development of technologies, services of future sixth-generation mobile communication technology (6G) services will use an extremely wide range of frequency bands, and adopt a wide variety of deployment modes. In this way, not only a multi-bandwidth channel is required, but also waveform schemes that satisfy different scenarios are needed. Implementing each waveform scheme independently would increase a cost of a base station/a terminal. How to design a unified waveform architecture that flexibly integrates multiple waveforms, how to flexibly support applications with different channel bandwidths, flexibly configure different subbands to adapt to different channel conditions, and improve spectral efficiency are problems that need to be solved.

In view of this, embodiments of the present disclosure provides a data transmission method, and the method includes: dividing data to be transmitted into N first sequences; where among the N first sequences, M first sequences each correspond to a single-carrier subband, and K first sequences each correspond to a multi-carrier subband, where N is a positive integer, M is a positive integer less than N, and K is equal to N-M; obtaining N second sequences based on the N first sequences, where the N second sequences include sequences obtained by sequentially performing an inverse Fourier transform and a cyclic prefix adding operation on first sequences corresponding to multi-carrier subbands, and sequences obtained without performing a cyclic prefix adding operation on first sequences corresponding to single-carrier subbands; obtaining a time-domain data sequence based on the N second sequences; and transmitting the time-domain data sequence on a transmission resource for the data to be transmitted. In this way, when single-carrier data and multi-carrier data are processed together, the single-carrier data, without adding a cyclic prefix, may be used together with the multi-carrier data to obtain the time-domain data sequence, which is more flexible than a traditional method and conducive to improving spectral efficiency.

The data transmission method provided in the embodiments of the present disclosure may be applied to systems of various communication standards. For example, the systems to which the data transmission method provided in the embodiments of the present disclosure may be applied include, but are not limited to, LTE systems, various versions evolved from LTE systems, 5G systems, and other communication systems. In addition, the data transmission method provided in the embodiments of the present disclosure may also be applied to future-oriented communication systems (e.g., 6G communication systems), etc.

A network architecture of a mobile communication network (including but not limited to 3G, 4G, 5G, and future mobile communication networks) in the embodiments of the present disclosure may at least include a first communication node and a second communication node. It should be understood that in the present example, in downlink, the first communication node may be a network-side device (e.g., including but not limited to a base station), and the second communication node may be a terminal-side device (e.g., including but not limited to a terminal). Of course, in uplink, the first communication node may also be a terminal-side device, and the second communication node may also be a network-side device. In a case where two communication nodes are in device-to-device (D2D) communication, the first communication node and the second communication node may both be base station-side devices or terminal-side devices. The first communication node and the second communication node may be referred to as a first node and a second node for short, respectively.

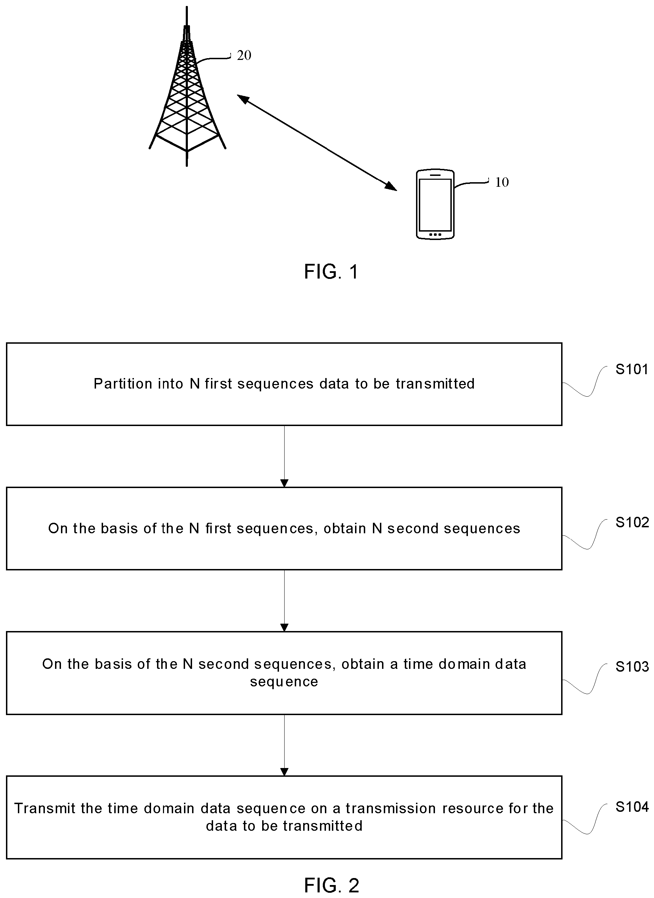

Exemplarily, taking an example in which the first communication node is a terminal and the second communication node is a base station. As shown in FIG. 1, FIG. 1 is a communication system provided by the embodiments of the present disclosure, the communication system includes a terminal 10 and a base station 20. There may be one or more terminals 10 and base stations 20, and numbers of terminal(s) 10 and base station(s) 20 are not limited in the embodiments of the present disclosure.

In some embodiments, the base station 20 provides a wireless access service for the terminal 10. A base station 20 provides at least one service coverage area (also referred to as a cell). A terminal 10 entering the area may communicate with the base station 20 via a wireless signal, thereby receiving the wireless access service provided by the base station 20.

In some embodiments, a base station (BS) may be a base station in long term evolution (LTE), long term evolution advanced (LTEA), or an evolutional node B (eNB or eNodeB), a base station device in a 5G network, or a base station in a future communication system, etc. The base station may also include various macro base stations, micro base stations, home base stations, remote radio units, reconfigurable intelligent surfaces (RISs), routers, relays, transmission receive points (TRPs), wireless fidelity (WiFi) devices, and other network-side devices.

In some embodiments, a terminal may be a device with a wireless transceiving function. The terminal may be a mobile phone, a tablet computer (Pad), a computer with a wireless transceiving function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. A terminal may also sometimes be referred to as a user, a user equipment (UE), an access terminal, a UE unit, a UE station, a mobile station, a mobile platform, a remote station, a remote terminal, a mobile device, a UE terminal, a wireless communication device, a UE agent, or a UE apparatus, which is not limited in the embodiments of the present disclosure.

It should be noted that FIG. 1 is only an exemplary diagram of a framework, and a number of devices included in FIG. 1 and names of the devices are not limited. In addition to the devices shown in FIG. 1, the communication system may further include other devices (e.g., a core network device).

The embodiments of the present disclosure do not limit the application scenarios. The system architecture and business scenarios described in the embodiments of the present disclosure are intended to illustrate the technical solutions of the embodiments of the present disclosure more clearly and do not constitute a limitation on the technical solutions provided by the embodiments of the present disclosure. A person of ordinary skill in the art will appreciate that with the evolution of network architecture and the emergence of new business scenarios, the technical solutions provided by the embodiments of the present disclosure are also applicable to similar technical problems.

The embodiments of the present disclosure provide a data transmission method. As shown in FIG. 2, the method at least includes S101 to S104.

In S101: data to be transmitted is divided into N first sequences.

Herein, among the N first sequences, M first sequences each correspond to a single-carrier subband, and K first sequences each correspond to a multi-carrier subband, where N is a positive integer, M is a positive integer less than N, and K is equal to N minus M (i.e., N-M).

It can be understood that when using a single carrier manner to transmit the first sequences, less power and energy are required, which may effectively reduce power consumption and energy consumption at a sending end and a receiving end. When using a multi-carrier manner to transmit the first sequences, the first sequences may be transmitted on different carriers, thereby reducing a risk of failure of a single carrier and improving system reliability and fault tolerance.

Within a time-domain symbol length, a number of pieces of data in the first sequences corresponding to multi-carrier subbands is less than a number of pieces of data in the first sequences corresponding to single-carrier subbands. This is beneficial due to that single-carrier data is more abundant than multi-carrier data, and thus more flexible. In addition, it may also enable a filter coefficient within a subband to be set to 1, without affecting performance due to a filter.

In some embodiments, each first sequence of the N first sequences is assigned a different subband, a total of N subbands, that is, the N first sequences correspond to the N subbands. The N subbands are all or a part of subbands included in a channel bandwidth.

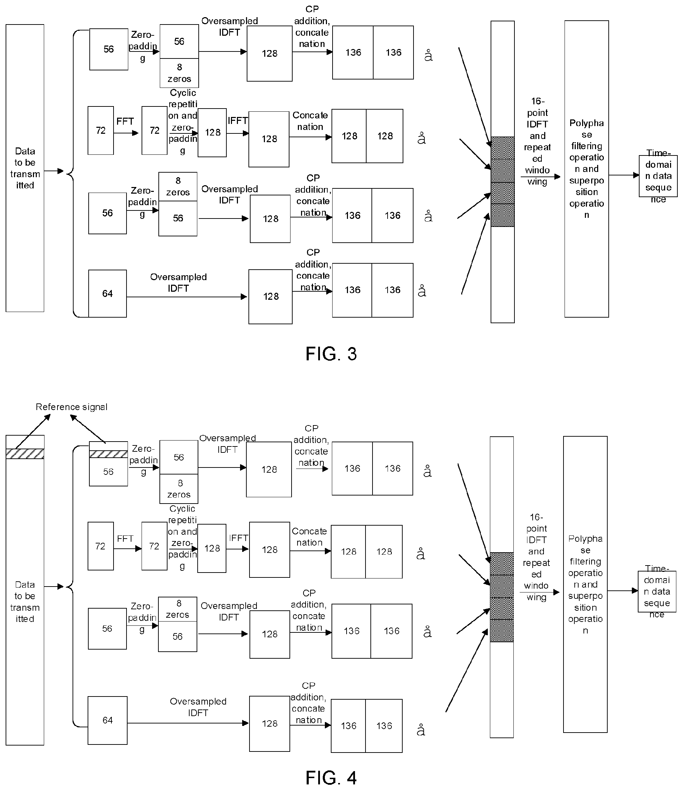

Exemplarily, as shown in FIG. 3, the data to be transmitted is divided into four first sequences, a first first sequence includes 56 data, a second first sequence includes 72 data, a third first sequence includes 56 data, and a fourth first sequence includes 64 data. The second first sequence corresponds to a single-carrier subband, and a remaining three first sequences each correspond to a multi-carrier subband. The first first sequence corresponds to multi-carrier subband 1, the second first sequence corresponds to single-carrier subband 2, the third first sequence corresponds to multi-carrier subband 3, and the fourth first sequence corresponds to multi-carrier subband 4.

In some embodiments, the N subbands satisfy at least one of following in frequency domain:
the N subbands are arbitrarily distributed in frequency domain;
the N subbands are continuous in frequency domain;
the N subbands have a same bandwidth; or
M single-carrier subbands among the N subbands are non-continuous in frequency domain.

In some embodiments, the data to be transmitted is all or a part of the data to be transmitted within the channel bandwidth.

In some embodiments, the data to be transmitted includes modulated data and/or reference signal data.

The modulated data may be constellation-point modulated data, where the constellation-point modulated data is used to transmit user data. The reference signal data is used to help the receiving end measure a channel state, perform a channel estimation, and a decoding. By using the reference signal data, the receiving end may demodulate and decode a signal more accurately, thereby improving communication reliability and performance.

In some embodiments, in a case where the data to be transmitted includes reference signal data, the N first sequences carry the reference signal data.

Exemplarily, as shown in FIG. 4, assuming that the data to be transmitted includes four pieces of reference signal data. The data to be transmitted is divided into four first sequences, each first sequence corresponds to a subband, the four first sequences include 56 pieces of data, 72 pieces of data, 56 pieces of data, and 64 pieces of data respectively, and a first group contains four reference signals. The first first sequence corresponds to multi-carrier subband 1, and the first first sequence carries reference signal data; the second first sequence corresponds to single-carrier subband 2; the third first sequence corresponds to multi-carrier subband 3; and the fourth first sequence corresponds to multi-carrier subband 4.

In some embodiments, subbands corresponding to N groups of the first sequences are single-carrier subbands. In this case, M is equal to N.

In some embodiments, within a time-domain symbol length, a number of pieces of data in the first sequences corresponding to the multi-carrier subbands is greater than a number of pieces of data in the first sequences corresponding to the single-carrier subbands; or
within a time-domain symbol length, a number of pieces of data in the first sequences corresponding to the multi-carrier subbands is equal to a number of pieces of data in the first sequences corresponding to the single-carrier subbands; or
within a time-domain symbol length, a number of pieces of data in the first sequences corresponding to the multi-carrier subbands is less than a number of pieces of data in the first sequences corresponding to the single-carrier subbands.

In some embodiments, the K first sequences at least include a first sequence corresponding to a first multi-carrier subband and a first sequence corresponding to a second multi-carrier subband; where the first multi-carrier subband is a multi-carrier subband adjacent to the single-carrier subband; the second multi-carrier subband is a multi-carrier subband that is not adjacent to the single-carrier subband.

In some embodiments, within a time-domain symbol length, a number of pieces of data in the first sequence corresponding to the second multi-carrier subband is equal to a number of subcarriers of the second multi-carrier subband.

In some embodiments, within a time-domain symbol length, a number of pieces of data in the first sequence corresponding to the first multi-carrier subband is less than a number of subcarriers of the first multi-carrier subband.

In some embodiments, within a time-domain symbol length, a number of pieces of data in the first sequence corresponding to the single-carrier subband is greater than a number of subcarriers of the multi-carrier subband; or,
within a time-domain symbol length, a number of pieces of data in the first sequence corresponding to the single-carrier subband is equal to a number of subcarriers of the multi-carrier subband; or,
within a time-domain symbol length, a number of pieces of data in the first sequence corresponding to the single-carrier subband is less than a number of subcarriers of the multi-carrier subband.

In some embodiments, within a same time length, the M first sequences have a same number of pieces of data.

In some embodiments, among the M first sequences, there exists a first sequence whose data has a same head section data and/or tail section data between adjacent time-domain symbols.

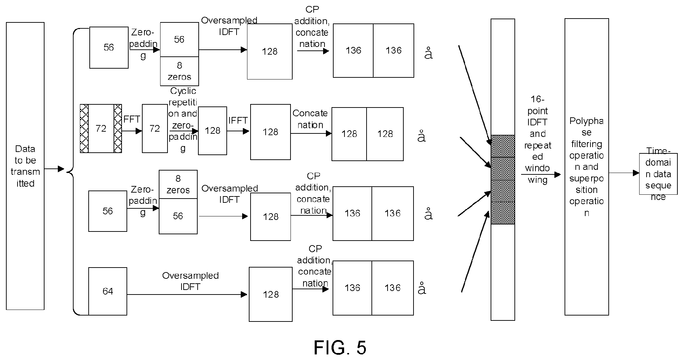

Exemplarily, as shown in FIG. 5, the data to be transmitted is divided into four first sequences, each first sequence corresponds to a subband, the four first sequences include 56 pieces of data, 72 pieces of data, 56 pieces of data, and 64 pieces of data respectively. The second first sequence corresponds to single-carrier subband 2, and the second first sequence has two identical pieces of data in head section and three identical pieces of data in tail section between adjacent time-domain symbols.

In some embodiments, within a time-domain symbol length, a number of pieces of data in the first sequence corresponding to the single-carrier subband is 2 to a power of i, where i is an integer greater than or equal to 0.

In some embodiments, within a time-domain symbol length, a number of pieces of data in the first sequence corresponding to the second multi-carrier subband is 2 to a power of j, where j is an integer greater than or equal to 0.

A time-domain symbol length above may be a duration of an OFDM symbol.

In some embodiments, there is no restriction on a configuration of K multi-carrier subbands corresponding to the K first sequences. For example, subcarrier spacings of the K multi-carrier subbands may be same or different from each other. As another example, numbers of subcarriers of the K multi-carrier subbands may be same or different from each other.

In some embodiments, a subband is a single-carrier subband, and a center frequency of the subband is located in a middle of a single-carrier subband.

In some embodiments, data in the first sequence corresponding to the first multi-carrier subband is mapped onto subcarriers within the first multi-carrier subband that are not adjacent to the single-carrier subband, and data mapped onto subcarriers within the first multi-carrier subband that are adjacent to the single-carrier subband is 0. In this way, at a junction between the single-carrier subband and the multi-carrier subband, since the single carrier may generate subband interference, mapping 0 onto the subcarriers adjacent to the single-carrier subband avoids such interference, while utilizing other subcarrier portions without interference, thereby improving spectral efficiency.

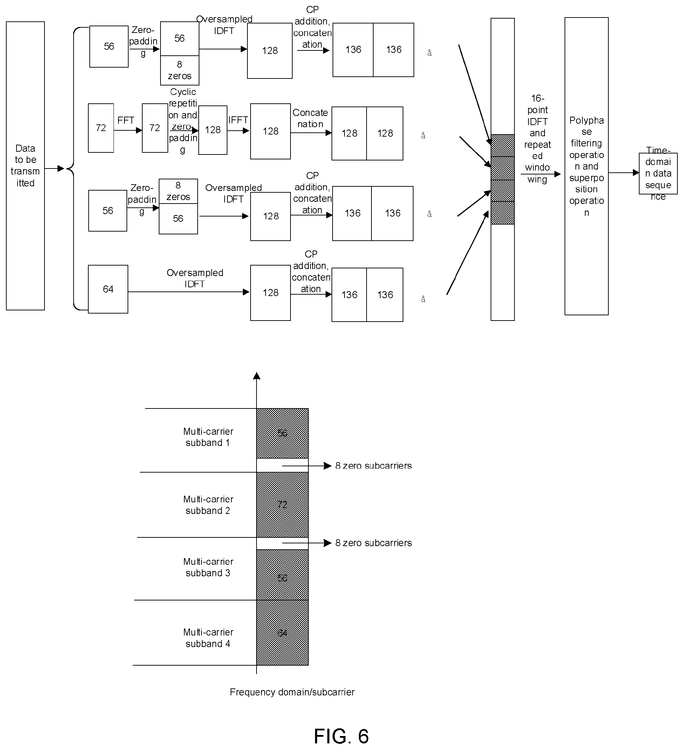

Exemplarily, as shown in FIG. 6, the data to be transmitted is divided into four first sequences, the first first sequence includes 56 pieces of data, the second first sequence includes 72 pieces of data, the third first sequence includes 56 pieces of data, and the fourth first sequence includes 64 pieces of data. Data in the first sequences corresponding to multi-carrier subband 1 and multi-carrier subband 3 are respectively mapped onto subcarriers within the multi-carrier subband 1 and the multi-carrier subband 3 that are not adjacent to single-carrier subband 2, and data mapped onto 8 subcarriers within the multi-carrier subband 1 that are adjacent to the single-carrier subband 2 is 0, and data mapped onto 8 subcarriers within the multi-carrier subband 3 that are adjacent to the single-carrier subband 2 is 0.

In some embodiments, both sides of a multi-carrier subband are respectively adjacent to two single-carrier subbands, and the multi-carrier subband is used for transmitting data or the multi-carrier subband is not used for transmitting data.

In S102: N second sequences are obtained based on the N first sequences.

The N second sequences include sequences obtained by sequentially performing an inverse Fourier transform and a cyclic prefix adding operation on first sequences corresponding to multi-carrier subbands, and sequences obtained without performing a cyclic prefix adding operation on first sequences corresponding to single-carrier subbands.

The inverse Fourier transform at least includes an oversampled inverse discrete Fourier transform (IDFT) and an inverse fast Fourier transform (IFFT).

In some embodiments, the cyclic prefix adding operation is to add a cyclic prefix to time-domain data obtained after performing the inverse Fourier transform on the first sequences corresponding to the multi-carrier subbands.

In some embodiments, the performing the inverse Fourier transform on the first sequences corresponding to the multi-carrier subbands is to perform the inverse Fourier transform on data within each time-domain symbol of the first sequences corresponding to the multi-carrier subbands separately.

In some embodiments, a number of pieces of data obtained after performing the inverse Fourier transform on a first sequence corresponding to a multi-carrier subband is equal to twice a number of subcarriers of the multi-carrier subband.

In some embodiments, a zero-frequency position for performing the inverse Fourier transform on a first sequence corresponding to a multi-carrier subband is within a subband corresponding to the first sequence; or, a zero-frequency position for performing the inverse Fourier transform on a first sequence corresponding to a multi-carrier subband is on a subcarrier within a subband corresponding to the first sequence.

In some embodiments, obtaining N second sequences based on the N first sequences includes: processing the M first sequences to obtain M second sequences.

In some embodiments, the processing the M first sequences to obtain the M second sequences includes: performing a Fourier transform on a first sequence to obtain a third sequence; performing a cyclic repetition on a part of data in the third sequence to obtain a fourth sequence, where a number of pieces of data in the fourth sequence is equal to twice the number of subcarriers of the multi-carrier subband; and performing an inverse Fourier transform on the fourth sequence to obtain the second sequence, where a number of pieces of data in the second sequence is equal to twice the number of subcarriers of the multi-carrier subband.

In some embodiments, the processing the M first sequences to obtain the M second sequences includes: performing a Fourier transform on the first sequence to obtain a third sequence; performing a cyclic repetition on a part of data in the third sequence to obtain a fifth sequence, where a number of pieces of data in the fifth sequence is less than twice the number of subcarriers of the multi-carrier subband; and performing an oversampled inverse Fourier transform on the fifth sequence to obtain the second sequence, where a number of pieces of data in the second sequence is equal to twice the number of subcarriers of the multi-carrier subband.

The Fourier transform at least includes a fast Fourier transform (FFT), and the inverse Fourier transform at least includes an IFFT and an IDFT.

In some embodiments, the Fourier transform is performed on data within each time-domain symbol of the first sequence separately.

Exemplarily, the Fourier transform is performed on data within an OFDM symbol in the first sequence, or the Fourier transform is performed on data within multiple OFDM symbols in the first sequence together.

Exemplarily, with continued reference to FIG. 3, FIG. 4, FIG. 5, or FIG. 6, an FFT is performed on the first sequence corresponding to single-carrier subband 2 to obtain a third sequence corresponding to the single-carrier subband 2; a cyclic repetition and a zero-padding operation are performed on a part of data in the third sequence corresponding to the single-carrier subband 2 to obtain a fifth sequence corresponding to the single-carrier subband 2, where a number of pieces of data in the fifth sequence corresponding to the single-carrier subband 2 is equal to 128; an IFFT and a concatenation are performed on the fifth sequence to obtain the second sequence corresponding to the single-carrier subband 2.

In some embodiments, the processing the M first sequences to obtain the M second sequences includes: taking the first sequence as the second sequence.

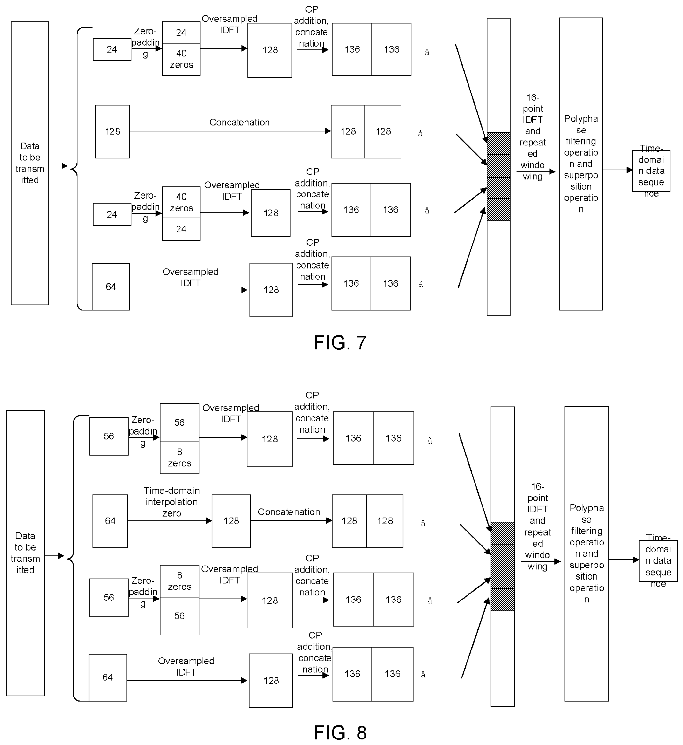

Exemplarily, as shown in FIG. 7, the first sequence corresponding to single-carrier subband 2 is taken as the second sequence corresponding to the single-carrier subband 2.

In some embodiments, the processing the M first sequences to obtain the M second sequences includes: performing an interpolation zero operation between two adjacent data in the first sequence, and performing an interpolation zero operation after last data in the first sequence, to obtain the second sequence.

Exemplarily, as shown in FIG. 8, a time-domain interpolation zero is performed on the first sequence including 64 data and corresponding to single-carrier subband 2, and then a concatenation is performed to obtain the second sequence including 128 data and corresponding to the single-carrier subband 2. That is, an interpolation zero operation is performed between two adjacent data in the first sequence including 64 data and corresponding to the single-carrier subband 2, and an interpolation zero operation and a concatenation are performed after last data in the first sequence, to obtain the second sequence, including 128 data and corresponding to the single-carrier subband 2.

In some embodiments, the obtaining the N second sequences based on the N first sequences includes: performing a zero-padding operation, an inverse Fourier transform, and a cyclic prefix adding operation on the first sequence corresponding to the first multi-carrier subband to obtain the second sequence corresponding to the first multi-carrier subband; and performing an inverse Fourier transform and a cyclic prefix adding operation on the first sequence corresponding to the second multi-carrier subband to obtain the second sequence corresponding to the second multi-carrier subband.

In some embodiments, the performing the zero-padding operation on the first sequence corresponding to the first multi-carrier subband includes: in a case where only a side of the first multi-carrier subband is adjacent to the single-carrier subband, performing a zero-padding operation on a side of the first sequence corresponding to the first multi-carrier subband that is adjacent to the single-carrier subband; or, in a case where both sides of the first multi-carrier subband are respectively adjacent to single-carrier subbands, performing zero-padding operations on both sides of the first sequence corresponding to the first multi-carrier subband. In this way, at a junction between the single-carrier subband and the multi-carrier subband, since the single carrier may generate subband interference, mapping 0 onto the subcarriers adjacent to the single-carrier subband avoids such interference, while utilizing other subcarrier portions without interference, thereby improving spectral efficiency.

In some embodiments, a number of zeros padded in the zero-padding operation is positively correlated with a roll-off factor of a filter of the single-carrier subband adjacent to the first multi-carrier subband. In this way, zero-padding is performed on data of adjacent subband affected by a filter roll-off portion, to avoid inter-subband interference.

Exemplarily, with continued reference to FIG. 3, FIG. 4, FIG. 5, or FIG. 6, multi-carrier subband 1 corresponding to a first first sequence and multi-carrier subband 3 corresponding to a third first sequence are adjacent to single-carrier subband 2 corresponding to a second first sequence, and a roll-off factor of a filter of the single-carrier subband 2 is 1/9; 8 zero subcarriers are added to a side of the multi-carrier subband 1 adjacent to the single-carrier subband 2, then an oversampled IDFT and a CP addition are performed, and then a concatenation is performed to obtain the second sequence corresponding to the multi-carrier subband 1; 8 zero subcarriers are added to a side of the multi-carrier subband 3 adjacent to the single-carrier subband 2, then an oversampled IDFT and a CP addition are performed, and then a concatenation is performed to obtain the second sequence corresponding to the multi-carrier subband 3; an oversampled IDFT and a CP addition are performed on multi-carrier subband 4, and then a concatenation is performed to obtain the second sequence corresponding to the multi-carrier subband 4.

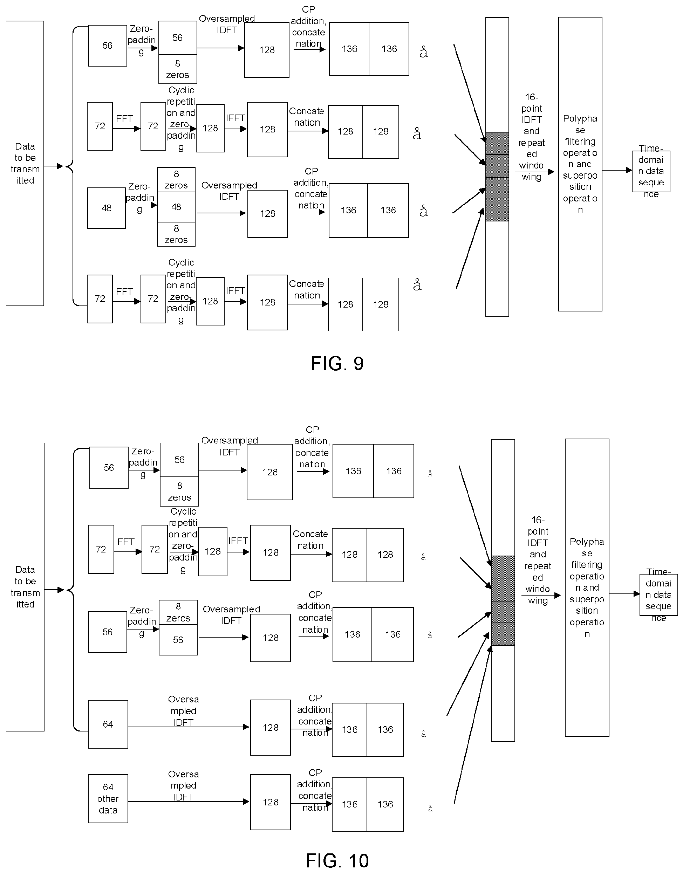

In another example, as shown in FIG. 9, the data to be transmitted is divided into four first sequences, a first first sequence includes 56 pieces of data, a second first sequence includes 72 pieces of data, a third first sequence includes 48 pieces of data, and a fourth first sequence includes 72 pieces of data. The first first sequence corresponds to multi-carrier subband 1, the second first sequence corresponds to single-carrier subband 2, the third first sequence corresponds to multi-carrier subband 3, and the fourth first sequence corresponds to single-carrier subband 4. A roll-off factor of a filter of the single-carrier subband 3 is 1/9, and a roll-off factor of a filter of the single-carrier subband 4 is 1/9.

The first sequence corresponding to multi-carrier subband 1 is adjacent to a side of single-carrier subband 2. 8 zero subcarriers are added to the side of the first sequence corresponding to the multi-carrier subband 1 adjacent to the single-carrier subband 2, then an oversampled IDFT, a CP addition, and a concatenation are performed to obtain the second sequence corresponding to the multi-carrier subband 1.

The first sequence corresponding to multi-carrier subband 3 is adjacent to a side of single-carrier subband 2 and adjacent to a side of single-carrier subband 4. 8 zero subcarriers are added to the side of the first sequence corresponding to the multi-carrier subband 3 adjacent to the single-carrier subband 2, and 8 zero subcarriers are added to another side of the first sequence corresponding to the multi-carrier subband 3 adjacent to the single-carrier subband 4, then an oversampled IDFT, a CP addition, and a concatenation are performed to obtain the second sequence corresponding to the multi-carrier subband 3.

An FFT is performed on the first sequence corresponding to single-carrier subband 2 to obtain a third sequence corresponding to the single-carrier subband 2; a cyclic repetition and a zero-padding operation are performed on a part of data in the third sequence corresponding to the single-carrier subband 2 to obtain a fifth sequence corresponding to the single-carrier subband 2, where a number of pieces of data in the fifth sequence corresponding to the single-carrier subband 2 is equal to 128; an IFFT is performed on the fifth sequence, and then a concatenation is performed to obtain the second sequence corresponding to the single-carrier subband 2.

An FFT is performed on the first sequence corresponding to single-carrier subband 4 to obtain a third sequence corresponding to the single-carrier subband 4; a cyclic repetition and a zero-padding operation are performed on a part of data in the third sequence corresponding to the single-carrier subband 4 to obtain a fifth sequence corresponding to the single-carrier subband 4, where a number of pieces of data in the fifth sequence corresponding to the single-carrier subband 4 is equal to 128; an IFFT is performed on the fifth sequence, and then a concatenation is performed to obtain the second sequence corresponding to the single-carrier subband 4.

In S103: a time-domain data sequence is obtained based on the N second sequences.

In some embodiments, an inverse Fourier transform is performed on the N second sequences to obtain a time-domain data sequence.

In some embodiments, a number of transformation points in the inverse Fourier transform is greater than N.

In some embodiments, obtaining a time-domain data sequence based on the N second sequences includes: obtaining P sixth sequences, where each sixth sequence of the P sixth sequences is a data sequence after two-times frequency-domain oversampling, P is a positive integer; and performing an inverse Fourier transform on the N second sequences and the P sixth sequences together to obtain the time-domain data sequence.

In some embodiments, data contained in the P sixth sequences is other data other than the data to be transmitted.

In some embodiments, the obtaining the time-domain data sequence based on the N second sequences includes: acquiring P sixth sequences, where P is a positive integer; performing a zero-padding operation and/or an inverse Fourier transform operation on the P sixth sequences respectively to obtain P eighth sequences, where each eighth sequence of the P eighth sequences includes a number of pieces of data equal to twice the number of subcarriers corresponding to the multi-carrier subband; and performing an inverse Fourier transform on the N second sequences and the P eighth sequences together to obtain the time-domain data sequence.

In some embodiments, the obtaining the time-domain data sequence based on the N second sequences includes: arranging the N second sequences in rows to obtain a data matrix; extracting multiple seventh sequences from the data matrix in columns, where each of the multiple seventh sequences includes N data; performing an inverse Fourier transform on the multiple seventh sequences respectively to obtain multiple time-domain data subsequences; and forming the time-domain data sequence with the multiple time-domain data subsequences.

In some embodiments, the time-domain data sequence is formed by concatenating multiple time-domain data subsequences.

In some embodiments, a concatenation interval between two time-domain data subsequences is half a length of a time-domain data subsequence.

In S104: the time-domain data sequence is transmitted on a transmission resource for the data to be transmitted.

In some embodiments, N subbands included in the transmission resource for the data to be transmitted are all or a part of subbands included in a channel bandwidth, where the N subbands are subbands corresponding to the N first sequences.

In some embodiments, before transmitting the time-domain data sequence on the transmission resource for the data to be transmitted, a filtering operation and/or a windowing operation is performed on the time-domain data sequence, where the filtering operation is single-phase filtering or polyphase filtering.

In some embodiments, the windowing operation includes: grouping the time-domain data sequence, performing a periodic extension, then performing a dot product with a preset function, and finally performing an offset superposition between respective groups.

In some embodiments, a filter function used for the polyphase filtering includes at least one of: a root raised cosine function, a raised cosine function, a rectangular function, or an isotropic orthogonal transform algorithm (IOTA) function.

In some embodiments, the polyphase filtering is to perform filtering on each group of the time-domain data sequences.

In some embodiments, the filtering operation satisfies at least one of: a coefficient of a filter corresponding to the filtering operation is a preset value; or a bandwidth of a filter corresponding to the filtering operation is greater than or equal to a bandwidth of a subband corresponding to the filtering operation.

In some embodiments, parameters of filters corresponding to different subbands among the N subbands are the same.

Exemplarily, the coefficient of the filter corresponding to the filtering operation is 1 within the subband.

In some embodiments, after performing the filtering operation and/or the windowing operation on the time-domain data sequence, an obtained time-domain data sequence is then subjected to DAC and/or RF. The DAC (Digital to Analog Converter) is a conversion of a digital signal to an analog signal. In time domain, this involves converting a digital data into a continuous analog waveform. For example, you may have a digital data sequence representing music or speech, these data is converted into an analog signal via a DAC, so that data may be played or transmitted. The RF (Radio Frequency) refers to a radio frequency signal processing. In wireless communications, information is modulated onto high-frequency radio waves and then transmitted.

Exemplarily, with continued reference to FIG. 3, FIG. 4, FIG. 5, or FIG. 6, a 16-point IDFT, a repeated windowing, a polyphase filtering operation, and a superposition operation are performed together on the second sequence corresponding to multi-carrier subband 1, the second sequence corresponding to single-carrier subband 2, the second sequence corresponding to multi-carrier subband 3, and the second sequence corresponding to multi-carrier subband 4, with a filter bandwidth of 72 times the subcarrier spacing and a roll-off factor of 0.11 (1/9), to form a time-domain data sequence. The time-domain data sequence is transmitted on the transmission resource for the data to be transmitted.

Exemplarily, with continued reference to FIG. 7, the data to be transmitted is divided into four first sequences, each first sequence corresponds to a subband, the four first sequences include 24 pieces of data, 128 pieces of data, 24 pieces of data, and 64 pieces of data respectively. A first first sequence corresponds to multi-carrier subband 1, a second first sequence corresponds to single-carrier subband 2, a third first sequence corresponds to multi-carrier subband 3, and a fourth first sequence corresponds to multi-carrier subband 4. 40 zero subcarriers are added to a rear end of the first sequence corresponding to the multi-carrier subband 1, then an oversampled IDFT, a CP addition, and a concatenation are performed to obtain the second sequence corresponding to the multi-carrier subband 1, where a number of pieces of data contained in the second sequence is136; 40 zero subcarriers are added to a rear end of the first sequence corresponding to the multi-carrier subband 3, then an oversampled IDFT, a CP addition, and a concatenation are performed to obtain the second sequence corresponding to the multi-carrier subband 3, where a number of pieces of data contained in the second sequence is 136; the first sequence corresponding to the single-carrier subband 2 is concatenated and used as the second sequence corresponding to the single-carrier subband 2; an oversampled IDFT, a CP addition, and a concatenation are performed on the first sequence corresponding to the multi-carrier subband 4 to obtain the second sequence corresponding to the multi-carrier subband 4. A 16-point IDFT, a repeated windowing, a polyphase filtering operation, and a superposition operation are performed on the four second sequences, with a filter bandwidth of 72 times the subcarrier spacing and a roll-off factor of 0.11 (1/9), to form a time-domain data sequence. The time-domain data sequence is transmitted on a time-frequency resource.

Exemplarily, with continued reference to FIG. 8, the data to be transmitted is divided into four first sequences, each of the four first sequences corresponds to a subband, the four first sequences include 56 pieces of data, 64 pieces of data, 56 pieces of data, and 64 pieces of data respectively. A first first sequence corresponds to multi-carrier subband 1, a second first sequence corresponds to single-carrier subband 2, a third first sequence corresponds to multi-carrier subband 3, and a fourth first sequence corresponds to multi-carrier subband 4. 8 zero subcarriers are added to a rear end of the first sequence corresponding to the multi-carrier subband 1, then an oversampled IDFT, a CP addition, and a concatenation are performed to obtain the second sequence corresponding to the multi-carrier subband 1, where the second sequence includes 136 data; 8 zero subcarriers are added to a rear end of the first sequence corresponding to the multi-carrier subband 3, then an oversampled IDFT, a CP addition, and a concatenation are performed to obtain the second sequence corresponding to the multi-carrier subband 3, where a number of pieces of data contained in the second sequence is136; a time-domain interpolation zero is performed on the first sequence corresponding to the single-carrier subband 2, and then a concatenation is performed to obtain the second sequence corresponding to the single-carrier subband 2, where a number of pieces of data contained in the second sequence is128; an oversampled IDFT, a CP addition, and a concatenation are performed on the first sequence corresponding to the multi-carrier subband 4 to obtain the second sequence corresponding to the multi-carrier subband 4, where a number of pieces of data contained in the second sequence is136. A 16-point inverse Fourier transform, a repeated windowing, a polyphase filtering, and a superposition are performed on the four second sequences, with a filter bandwidth of 72 times the subcarrier spacing and a roll-off factor of 0.11 (1/9), to form a time-domain data sequence. The time-domain data sequence is transmitted on a time-frequency resource.

Exemplarily, with continued reference to FIG. 9, a 16-point IDFT, a repeated windowing, a polyphase filtering operation, and a superposition operation are performed together on the second sequence corresponding to multi-carrier subband 1, the second sequence corresponding to single-carrier subband 2, the second sequence corresponding to multi-carrier subband 3, and the second sequence corresponding to single-carrier subband 4, with a filter bandwidth of 72 times the subcarrier spacing and a roll-off factor of 0.11 (1/9), to form a time-domain data sequence. The time-domain data sequence is transmitted on the transmission resource for the data to be transmitted.

Exemplarily, as shown in FIG. 10, the data to be transmitted is divided into four first sequences, each first sequence corresponds to a subband, the four first sequences include 56 pieces of data, 72 pieces of data, 56 pieces of data, and 64 pieces of data respectively. A first first sequence corresponds to multi-carrier subband 1, a second first sequence corresponds to single-carrier subband 2, a third first sequence corresponds to multi-carrier subband 3, and a fourth first sequence corresponds to multi-carrier subband 4. 8 zero subcarriers are added to a rear end of the first sequence corresponding to the multi-carrier subband 1, then an oversampled IDFT, a CP addition, and a concatenation are performed to obtain the second sequence corresponding to the multi-carrier subband 1. 8 zero subcarriers are added to a front end of the first sequence corresponding to the multi-carrier subband 3, then an oversampled IDFT, a CP addition, and a concatenation are performed to obtain the second sequence corresponding to the multi-carrier subband 3. An FFT is performed on the first sequence corresponding to the single-carrier subband 2 to obtain a third sequence corresponding to the single-carrier subband 2; a cyclic repetition and a zero-padding operation are performed on a part of data in the third sequence corresponding to the single-carrier subband 2 to obtain a fifth sequence corresponding to the single-carrier subband 2, where a number of pieces of data in the fifth sequence corresponding to the single-carrier subband 2 is equal to 128; an IFFT is performed on the fifth sequence, and then a concatenation is performed to obtain the second sequence corresponding to the single-carrier subband 2. An oversampled IDFT, a CP addition, and a concatenation are performed on the first sequence corresponding to the multi-carrier subband 4 to obtain the second sequence corresponding to the multi-carrier subband 4. A sixth sequence including 64 other data is obtained, and an oversampled IDFT is performed on the sixth sequence to obtain a sequence including 128 pieces of data, followed by a CP addition and a concatenation. A 16-point inverse Fourier transform, a repeated windowing, a polyphase filtering operation, and a superposition operation are performed together with the above four groups of second sequences, with a filter bandwidth of 72 times the subcarrier spacing and a roll-off factor of 0.11 (1/9), to form a time-domain data sequence. The time-domain data sequence is transmitted on a time-frequency resource.

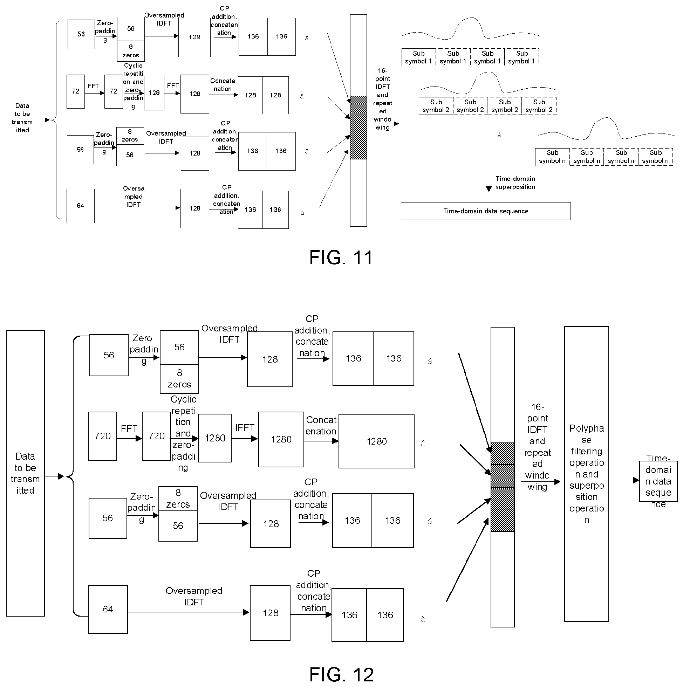

Exemplarily, as shown in FIG. 11, the data to be transmitted is divided into four first sequences, each of the four first sequences corresponds to a subband, the four first sequences include 56 pieces of data, 72 pieces of data, 56 pieces of data, and 64 pieces of data respectively. A first first sequence corresponds to multi-carrier subband 1, a second first sequence corresponds to single-carrier subband 2, a third first sequence corresponds to multi-carrier subband 3, and a fourth first sequence corresponds to multi-carrier subband 4. 8 zero subcarriers are added to a rear end of the first sequence corresponding to the multi-carrier subband 1, then an oversampled IDFT, a CP addition, and a concatenation are performed to obtain the second sequence corresponding to the multi-carrier subband 1. 8 zero subcarriers are added to a front end of the first sequence corresponding to the multi-carrier subband 3, then an oversampled IDFT, a CP addition, and a concatenation are performed to obtain the second sequence corresponding to the multi-carrier subband 3. An FFT is performed on the first sequence corresponding to the single-carrier subband 2 to obtain a third sequence corresponding to the single-carrier subband 2; a cyclic repetition and a zero-padding operation are performed on a part of data in the third sequence corresponding to the single-carrier subband 2 to obtain a fifth sequence corresponding to the single-carrier subband 2, where a number of pieces of data in the fifth sequence corresponding to the single-carrier subband 2 is equal to 128; an IFFT is performed on the fifth sequence, and then a concatenation is performed to obtain the second sequence corresponding to the single-carrier subband 2. An oversampled IDFT, a CP addition, and a concatenation are performed on the first sequence corresponding to the multi-carrier subband 4 to obtain the second sequence corresponding to the multi-carrier subband 4. The above four groups of second sequences are arranged in rows to obtain a data matrix; multiple seventh sequences are extracted from the data matrix by column, where each of the multiple seventh sequences includes 4 data; a 16-point IDFT, a repeated windowing, a polyphase filtering operation, and a superposition operation are performed on the multiple seventh sequences respectively, with a filter bandwidth of 72 times the subcarrier spacing and a roll-off factor of 0.11 (1/9), to obtain multiple time-domain data subsequences; the multiple time-domain data subsequences are superposed in time domain to obtain a time-domain data sequence, that is, the time-domain data sequence is formed by concatenating the multiple time-domain data subsequences, and a concatenation interval between two time-domain data subsequences is half a length of a time-domain data subsequence. The time-domain data sequence is transmitted on a time-frequency resource.

Exemplarily, as shown in FIG. 12, the data to be transmitted is divided into four first sequences, each of the four first sequences corresponds to a subband, the four first sequences include 56 pieces of data, 720 pieces of data, 56 pieces of data, and 64 pieces of data respectively. A first first sequence corresponds to multi-carrier subband 1, a second first sequence corresponds to single-carrier subband 2, a third first sequence corresponds to multi-carrier subband 3, and a fourth first sequence corresponds to multi-carrier subband 4. 8 zero subcarriers are added to a rear end of the first sequence corresponding to the multi-carrier subband 1, then an oversampled IDFT, a CP addition, and a concatenation are performed to obtain the second sequence corresponding to the multi-carrier subband 1. 8 zero subcarriers are added to a front end of the first sequence corresponding to the multi-carrier subband 3, then an oversampled IDFT, a CP addition, and a concatenation are performed to obtain the second sequence corresponding to the multi-carrier subband 3. An FFT is performed on the first sequence corresponding to the single-carrier subband 2 to obtain a third sequence corresponding to the single-carrier subband 2; a cyclic repetition and a zero-padding operation are performed on a part of data in the third sequence corresponding to the single-carrier subband 2 to obtain a fifth sequence corresponding to the single-carrier subband 2, where a number of pieces of data in the fifth sequence corresponding to the single-carrier subband 2 is equal to 1280; an IFFT is performed on the fifth sequence, and then a concatenation is performed to obtain the second sequence corresponding to the single-carrier subband 2. An oversampled IDFT, a CP addition, and a concatenation are performed on the first sequence corresponding to the multi-carrier subband 4 to obtain the second sequence corresponding to the multi-carrier subband 4. A 16-point IDFT, a repeated windowing, a polyphase filtering operation, and a superposition operation are performed on the above four groups of second sequences, with a filter bandwidth of 72 times the subcarrier spacing and a roll-off factor of 0.11 (1/9), to obtain a time-domain data sequence. The time-domain data sequence is transmitted on a time-frequency resource.

Based on this, by obtaining N second sequences based on the N first sequences, where the N second sequences includes sequences obtained by sequentially performing an inverse Fourier transform and a cyclic prefix adding operation on the first sequences corresponding to the multi-carrier subbands, and sequences obtained without performing the cyclic prefix adding operation on the first sequences corresponding to the single-carrier subbands, in this way, when single-carrier data and multi-carrier data are processed together, the single-carrier data may be used together with the multi-carrier data to obtain the time-domain data sequence without adding a cyclic prefix, which is more flexible than a traditional method and conducive to improving spectral efficiency.

The above mainly describes the solutions of the embodiments of the present disclosure from a perspective of the method. A data transmission apparatus is also described below for performing the data transmission method in any one of the above embodiments and the implementations thereof. It can be understood that, in order to implement the data transmission method, the data transmission apparatus includes corresponding hardware structures and/or software modules for performing each function. Those skilled in the art should readily appreciate that, in combination with the algorithm steps of the examples described in the embodiments of the present disclosure, the present disclosure can be implemented in hardware or a combination of hardware and computer software. Whether a function is performed in hardware or computer software-driven hardware depends on the specific application and design constraint conditions of the technical solution. Professional technicians may use different methods for each specific application to implement the described functions, however, such implementation should not be considered beyond the scope of the present disclosure.

The embodiments of the present disclosure may divide the functional modules of the data transmission apparatus according to the above method embodiments. For example, each function may be divided into a corresponding functional module, or two or more functions may be integrated into a functional module. The above integrated module may be implemented in a form of hardware or software. It should be noted that the division of modules in the embodiments of the present disclosure is illustrative and is merely a logical function division, and there may be other division manners in actual implementation. The following description takes dividing each function into a corresponding functional module as an example.

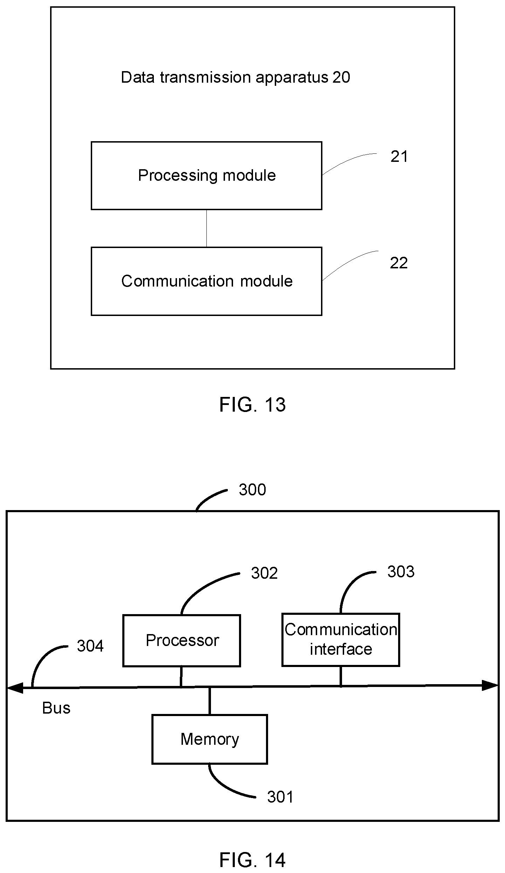

FIG. 13 is a data transmission apparatus provided by the embodiments of the present disclosure, applicable to a first communication node. The data transmission apparatus 20 includes: a processing module 21 and a communication module 22.

The processing module 21 is configured to divide data to be transmitted into N first sequences; where among the N first sequences, M first sequences each correspond to a single-carrier subband, and K first sequences each correspond to a multi-carrier subband, where N is a positive integer, M is a positive integer less than N, and K is equal to N minus M (i.e., N-M);
the processing module 21 is further configured to obtain N second sequences based on the N first sequences, where the N second sequences includes sequences obtained by sequentially performing an inverse Fourier transform and a cyclic prefix adding operation on first sequences corresponding to multi-carrier subbands, and sequences obtained without performing a cyclic prefix adding operation on first sequences corresponding to single-carrier subbands;
the processing module 21 is further configured to obtain a time-domain data sequence based on the N second sequences; and
the communication module 22 is configured to transmit the time-domain data sequence on a transmission resource for the data to be transmitted.

In some embodiments, N subbands included in the transmission resource for the data to be transmitted are all or a part of subbands included in a channel bandwidth, where the N subbands are subbands corresponding to the N first sequences.

In some embodiments, the N subbands satisfy, in frequency domain, at least one of:
the N subbands are arbitrarily distributed in frequency domain;
the N subbands are continuous in frequency domain;
the N subbands have a same bandwidth; or
M single-carrier subbands among the N subbands are non-continuous in frequency domain.

In some embodiments, the cyclic prefix adding operation is to add a cyclic prefix to time-domain data obtained after performing an inverse Fourier transform on the first sequences corresponding to the multi-carrier subbands.

In some embodiments, the performing the inverse Fourier transform on the first sequences corresponding to the multi-carrier subbands is to perform the inverse Fourier transform on data within each time-domain symbol of the first sequences corresponding to the multi-carrier subbands separately.

In some embodiments, within a time-domain symbol length, a number of pieces of data in the first sequences corresponding to multi-carrier subbands is greater than a number of pieces of data in the first sequences corresponding to single-carrier subbands; or
within a time-domain symbol length, a number of pieces of data in the first sequences corresponding to multi-carrier subbands is equal to a number of pieces of data in the first sequences corresponding to single-carrier subbands; or
within a time-domain symbol length, a number of pieces of data in the first sequences corresponding to multi-carrier subbands is less than a number of pieces of data in the first sequences corresponding to single-carrier subbands.

In some embodiments, K first sequences at least include a first sequence corresponding to a first multi-carrier subband and a first sequence corresponding to a second multi-carrier subband; the first multi-carrier subband is a multi-carrier subband adjacent to the single-carrier subband; the second multi-carrier subband is a multi-carrier subband that is not adjacent to the single-carrier subband.

In some embodiments, within a time-domain symbol length, a number of pieces of data in the first sequence corresponding to the second multi-carrier subband is equal to a number of subcarriers of the second multi-carrier subband, and a number of pieces of data in the first sequence corresponding to the first multi-carrier subband is less than a number of subcarriers of the first multi-carrier subband.

In some embodiments, within a time-domain symbol length, a number of pieces of data in the first sequence corresponding to the single-carrier subband is greater than a number of subcarriers of the multi-carrier subband; or,
within a time-domain symbol length, a number of pieces of data in the first sequence corresponding to the single-carrier subband is equal to a number of subcarriers of the multi-carrier subband; or,
within a time-domain symbol length, a number of pieces of data in the first sequence corresponding to the single-carrier subband is less than a number of subcarriers of the multi-carrier subband.

In some embodiments, within a same time length, the M first sequences have a same number of pieces of data.

In some embodiments, both sides of a multi-carrier subband are respectively adjacent to two single-carrier subbands, and the multi-carrier subband is used for transmitting data or the multi-carrier subband is not used for transmitting data.

In some embodiments, among the M first sequences, there exists a first sequence whose data has a same head section data and/or tail section data between adjacent time-domain symbols.

In some embodiments, a subband is a single-carrier subband, and a center frequency of the subband is located in a middle of the single-carrier subband.

In some embodiments, the processing module 21 is configured to perform a zero-padding operation, an inverse Fourier transform, and a cyclic prefix adding operation on the first sequence corresponding to the first multi-carrier subband to obtain the second sequence corresponding to the first multi-carrier subband; and perform an inverse Fourier transform and a cyclic prefix adding operation on the first sequence corresponding to the second multi-carrier subband to obtain the second sequence corresponding to the second multi-carrier subband.

In some embodiments, the processing module 21 is configured to, in a case where only a side of the first multi-carrier subband is adjacent to the single-carrier subband, perform a zero-padding operation on a side of the first sequence corresponding to the first multi-carrier subband that is adjacent to the single-carrier subband; or, in a case where both sides of the first multi-carrier subband are respectively adjacent to single-carrier subbands on both sides, perform zero-padding operations on both sides of the first sequence corresponding to the first multi-carrier subband.

In some embodiments, a number of zeros padded in the zero-padding operation is positively correlated with a roll-off factor of a filter of the single-carrier subband adjacent to the first multi-carrier subband.

In some embodiments, after the performing the zero-padding operation and the inverse Fourier transform on the first sequence corresponding to the first multi-carrier subband, a number of pieces of data is equal to twice a number of subcarriers of the first multi-carrier subband; after the performing the inverse Fourier transform on the first sequence corresponding to the second multi-carrier subband, a number of pieces of data is equal to twice a number of subcarriers of the second multi-carrier subband.

In some embodiments, data in the first sequence corresponding to the first multi-carrier subband is mapped onto subcarriers within the first multi-carrier subband that are not adjacent to the single-carrier subband, and data mapped onto subcarriers within the first multi-carrier subband that are adjacent to the single-carrier subband is 0.

In some embodiments, a zero-frequency position for performing an inverse Fourier transform on a first sequence corresponding to a multi-carrier subband is within a subband corresponding to the first sequence; or, a zero-frequency position for performing an inverse Fourier transform on a first sequence corresponding to a multi-carrier subband is on a subcarrier within a subband corresponding to the first sequence.

In some embodiments, the processing module 21 is configured to process the M first sequences to obtain M second sequences.

In some embodiments, the processing module 21 is configured to perform an interpolation zero operation between two adjacent pieces of data in the first sequence, and perform an interpolation zero operation after last data in the first sequence to obtain the second sequence.

In some embodiments, the processing module 21 is configured to perform a Fourier transform on a first sequence to obtain a third sequence; perform a cyclic repetition on a part of data in the third sequence to obtain a fourth sequence, where a number of pieces of data in the fourth sequence is equal to twice a number of subcarriers of the multi-carrier subband; and perform an inverse Fourier transform on the fourth sequence to obtain the second sequence.

In some embodiments, the processing module 21 is configured to perform a Fourier transform on a first sequence to obtain a third sequence; perform a cyclic repetition on a part of data in the third sequence to obtain a fifth sequence, where a number of pieces of data in the fifth sequence is less than twice a number of subcarriers of the multi-carrier subband; and perform an oversampled inverse Fourier transform on the fifth sequence to obtain the second sequence.

In some embodiments, the processing module 21 is configured to take the first sequence as the second sequence.

In some embodiments, the processing module 21 is configured to perform an inverse Fourier transform on the N second sequences to obtain the time-domain data sequence.

In some embodiments, a number of transformation points in the inverse Fourier transform is greater than N.

In some embodiments, the processing module 21 is configured to obtain P sixth sequences, where a sixth sequence is data sequences after two-times frequency-domain oversampling, and P is a positive integer; and perform an inverse Fourier transform on the N second sequences and the P sixth sequences together to obtain the time-domain data sequence.

In some embodiments, the processing module 21 is configured to arrange the N second sequences in rows to obtain a data matrix; extract multiple seventh sequences from the data matrix in columns, where each seventh sequence of the multiple seventh sequences includes N data; perform an inverse Fourier transform on the multiple seventh sequences respectively to obtain a plurality of time-domain data subsequences; and form the time-domain data sequence with the plurality of time-domain data subsequences.

In some embodiments, the time-domain data sequence is formed by concatenating the plurality of time-domain data subsequences.

In some embodiments, a concatenation interval between two time-domain data subsequences is half a length of a time-domain data subsequence.

In some embodiments, the processing module 21 is further configured to perform a filtering operation and/or a windowing operation on the time-domain data sequence, where the filtering operation is single-phase filtering or polyphase filtering.

In some embodiments, the data to be transmitted includes modulated data and/or reference signal data.

In some embodiments, in a case where the data to be transmitted includes the reference signal data, the N first sequences carry the reference signal data.

in a case where the functions of the above integrated modules are implemented in hardware, the embodiments of the present disclosure further provides a communication apparatus structure, the communication apparatus is used for performing the data transmission method provided in the embodiments of the present disclosure. As shown in FIG. 14, the communication apparatus 300 includes: a communication interface 303, a processor 302, and a bus 304. In some embodiments, the communication apparatus may further include a memory 301.

The processor 302 may be configured to implement or execute various exemplary logic blocks, modules, and circuits described in connection with the embodiments of the present disclosure. The processor 302 may be a central processing unit, a general-purpose processor, a digital signal processor, an application-specific integrated circuit, a field-programmable gate array, or other programmable logic device, transistor logic device, hardware component, or any combination thereof. The processor 302 may implement or execute various exemplary logic blocks, modules, and circuits described in connection with the embodiments of the present disclosure. The processor 302 may also be a combination that implements computing functions, such as a combination of one or more microprocessors, a combination of a digital signal processor (DSP) and a microprocessor, etc.

The communication interface 303 is used to connect with other devices via a communication network. The communication network may be Ethernet, a wireless access network, a wireless local area network (WLAN), etc.

The memory 301 may be a read-only memory (ROM) or other type of static storage device that may store static information and instructions, a random access memory (RAM) or other type of dynamic storage device that may store information and instructions, or may also be an electrically erasable programmable read-only memory (EEPROM), a magnetic disk storage medium or other magnetic storage device, or any other medium that can be used to carry or store desired program code in a form of instructions or data structures and that can be accessed by a computer, but not limited thereto.

As an implementation, the memory 301 may exist independently of the processor 302, and the memory 301 may be connected to the processor 302 via the bus 304 for storing instructions or program code. The processor 302, upon revoking and executing the instructions or program code stored in the memory 301, can implement the data transmission method provided in the embodiments of the present disclosure.

In another implementation, the memory 301 may also be integrated with the processor 302.

The bus 304 may be an extended industry standard architecture (EISA) bus, etc. The buses 304 may be classified into an address bus, a data bus, a control bus, etc. For ease of representation, only one thick line is used in FIG. 14, but it does not mean that there is only one bus or one type of bus.

Some embodiments of the present disclosure provide a computer-readable storage medium (e.g., a non-transitory computer-readable storage medium), the computer-readable storage medium is stored with computer program instructions, the computer program instructions, upon being executed on a computer, enable the computer to perform the data transmission method according to any one of the above embodiments.

In an implementation, the computer may be the above data transmission apparatus, and a detailed form of the computer is not limited in the embodiments of the present disclosure.

In some examples, the above computer-readable storage medium may include, but is not limited to: magnetic storage devices (e.g., hard disks, floppy disks, or tapes, etc.), optical disks (e.g., Compact Disk (CD), Digital Versatile Disk (DVD), etc.), smart cards, and flash memory devices (e.g., Erasable Programmable Read-Only Memory (EPROM), cards, sticks, or key drives, etc.). The various computer-readable storage media described in the embodiments of the present disclosure may represent one or more devices and/or other machine-readable storage media for storing information. The term "machine-readable storage medium" may include, but is not limited to, wireless channels and various other media capable of storing, containing, and/or carrying instructions and/or data.

An embodiment of the present disclosure provides a computer program product containing instructions, the computer program product, upon being executed on a computer, enable the computer to perform the data transmission method according to any one of the above embodiments.

The above are merely specific implementations of the present disclosure, but the protection scope of the present disclosure is not limited thereto. Any changes or substitutions within the technical scope disclosed in the present disclosure should be covered by the protection scope of the present disclosure. Therefore, the protection scope of the present disclosure should be subject to the protection scope of the claims.

## Claims

1. A data transmission method, comprising:
dividing data to be transmitted into N first sequences; wherein among the N first sequences, M first sequences each correspond to a single-carrier subband, and K first sequences each correspond to a multi-carrier subband, N being a positive integer, M being a positive integer less than N, and K being equal to N-M;
obtaining N second sequences based on the N first sequences, wherein the N second sequences includes sequences obtained by sequentially performing an inverse Fourier transform and a cyclic prefix adding operation on first sequences corresponding to multi-carrier subbands, and sequences obtained without performing a cyclic prefix adding operation on first sequences corresponding to single-carrier subbands;
obtaining a time-domain data sequence based on the N second sequences; and
transmitting the time-domain data sequence on a transmission resource for the data to be transmitted.

2. The method according to claim 1, wherein N subbands included in the transmission resource for the data to be transmitted are all or a part of subbands included in a channel bandwidth, wherein the N subbands are subbands corresponding to the N first sequences.

3. The method according to claim 2, wherein the N subbands satisfy, in frequency domain, at least one of:
the N subbands are arbitrarily distributed in frequency domain;
the N subbands are continuous in frequency domain;
the N subbands have a same bandwidth; or
M single-carrier subbands among the N subbands are non-continuous in frequency domain.

4. The method according to claim 1, wherein the cyclic prefix adding operation is to add a cyclic prefix to time-domain data obtained after performing an inverse Fourier transform on the first sequences corresponding to the multi-carrier subbands.

5. The method according to claim 1, wherein
within a time-domain symbol length, a number of pieces of data in the first sequences corresponding to the multi-carrier subbands is greater than a number of pieces of data in the first sequences corresponding to the single-carrier subbands; or
within a time-domain symbol length, a number of pieces of data in the first sequences corresponding to the multi-carrier subbands is equal to a number of pieces of data in the first sequences corresponding to the single-carrier subbands; or
within a time-domain symbol length, a number of pieces of data in the first sequences corresponding to the multi-carrier subbands is less than a number of pieces of data in the first sequences corresponding to the single-carrier subbands.

6. The method according to claim 1, wherein the K first sequences at least include a first sequence corresponding to a first multi-carrier subband and a first sequence corresponding to a second multi-carrier subband; wherein the first multi-carrier subband is a multi-carrier subband adjacent to the single-carrier subband; the second multi-carrier subband is a multi-carrier subband that is not adjacent to the single-carrier subband.

7. The method according to claim 6, wherein within a time-domain symbol length, a number of pieces of data in the first sequence corresponding to the second multi-carrier subband is equal to a number of subcarriers of the second multi-carrier subband, and a number of pieces of data in the first sequence corresponding to the first multi-carrier subband is less than a number of subcarriers of the first multi-carrier subband.

8. The method according to claim 6, wherein
within a time-domain symbol length, a number of pieces of data in the first sequence corresponding to the single-carrier subband is greater than a number of subcarriers of the multi-carrier subband; or
within a time-domain symbol length, a number of pieces of data in the first sequence corresponding to the single-carrier subband is equal to a number of subcarriers of the multi-carrier subband; or
within a time-domain symbol length, a number of pieces of data in the first sequence corresponding to the single-carrier subband is less than a number of subcarriers of the multi-carrier subband.

9. The method according to claim 1, wherein within a same time length, the M first sequences have a same number of pieces of data.

10. The method according to claim 1, wherein both sides of a multi-carrier subband are respectively adjacent to two single-carrier subbands, and the multi-carrier subband is used for transmitting data, or the multi-carrier subband is not used for transmitting data.

11. The method according to claim 1, wherein
among the M first sequences, there exists a first sequence whose data has a same head section data between adjacent time-domain symbols;
among the M first sequences, there exists a first sequence whose data has a same tail section data between adjacent time-domain symbols; and
among the M first sequences, there exists a first sequence whose data has a same head section data and a same tail section data between adjacent time-domain symbols.

12. The method according to claim 1, wherein a subband is a single-carrier subband, and a center frequency of the subband is located in a middle of a single-carrier subband.

13. The method according to claim 6, wherein the obtaining the N second sequences based on the N first sequences comprises:
performing a zero-padding operation, an inverse Fourier transform, and a cyclic prefix adding operation on the first sequence corresponding to the first multi-carrier subband to obtain a second sequence corresponding to the first multi-carrier subband; and
performing an inverse Fourier transform and a cyclic prefix adding operation on the first sequence corresponding to the second multi-carrier subband to obtain a second sequence corresponding to the second multi-carrier subband.

14. The method according to claim 13, wherein the performing the zero-padding operation on the first sequence corresponding to the first multi-carrier subband comprises:
in a case where only a side of the first multi-carrier subband is adjacent to the single-carrier subband, performing a zero-padding operation on a side of the first sequence corresponding to the first multi-carrier subband that is adjacent to the single-carrier subband; or
in a case where both sides of the first multi-carrier subband are respectively adjacent to the single-carrier subbands, performing zero-padding operations on both sides of the first sequence corresponding to the first multi-carrier subband.

15. The method according to claim 14, wherein a number of zeros padded in the zero-padding operation is positively correlated with a roll-off factor of a filter of the single-carrier subband adjacent to the first multi-carrier subband.

16. The method according to claim 13, wherein after the performing the zero-padding operation and the inverse Fourier transform on the first sequence corresponding to the first multi-carrier subband, a number of pieces of data is equal to twice a number of subcarriers of the first multi-carrier subband; and after the performing the inverse Fourier transform on the first sequence corresponding to the second multi-carrier subband, a number of pieces of data is equal to twice a number of subcarriers of the second multi-carrier subband.

17. The method according to claim 6, wherein data in the first sequence corresponding to the first multi-carrier subband is mapped onto subcarriers within the first multi-carrier subband that are not adjacent to the single-carrier subband, and data mapped onto subcarriers within the first multi-carrier subband that are adjacent to the single-carrier subband is 0.

18. The method according to claim 1, wherein a zero-frequency position for performing an inverse Fourier transform on a first sequence corresponding to a multi-carrier subband is within a subband corresponding to the first sequence; or, a zero-frequency position for performing an inverse Fourier transform on a first sequence corresponding to a multi-carrier subband is on a subcarrier within a subband corresponding to the first sequence.

19. The method according to claim 1, wherein the obtaining the N second sequences based on the N first sequences comprises:
processing the M first sequences to obtain M second sequences.

20. The method according to claim 19, wherein the processing the M first sequences to obtain the M second sequences comprises:
performing an interpolation zero operation between two adjacent pieces of data in the first sequence, and performing an interpolation zero operation after last data in the first sequence, to obtain the second sequence.

21. The method according to claim 19, wherein the processing the M first sequences to obtain the M second sequences comprises:
performing a Fourier transform on the first sequence to obtain a third sequence;
performing a cyclic repetition on a part of data in the third sequence to obtain a fourth sequence, wherein a number of pieces of data in the fourth sequence is equal to twice a number of subcarriers of a multi-carrier subband; and
performing an inverse Fourier transform on the fourth sequence to obtain the second sequence.

22. The method according to claim 19, wherein the processing the M first sequences to obtain the M second sequences comprises:
performing a Fourier transform on the first sequence to obtain a third sequence;
performing a cyclic repetition on a part of data in the third sequence to obtain a fifth sequence, wherein a number of pieces of data in the fifth sequence is less than twice a number of subcarriers of a multi-carrier subband; and
performing an oversampled inverse Fourier transform on the fifth sequence to obtain the second sequence.

23. The method according to claim 21 or 22, wherein the Fourier transform is to perform a Fourier transform on data within each time-domain symbol of the first sequence respectively.

24. The method according to claim 19, wherein the processing the M first sequences to obtain the M second sequences comprises:
taking the first sequence as the second sequence.

25. The method according to claim 1, wherein the obtaining the time-domain data sequence based on the N second sequences comprises:
performing an inverse Fourier transform on the N second sequences to obtain the time-domain data sequence.

26. The method according to claim 25, wherein a number of transformation points in the inverse Fourier transform is greater than N.

27. The method according to claim 25, wherein the performing the inverse Fourier transform on the N second sequences to obtain the time-domain data sequence comprises:
obtaining P sixth sequences, wherein each sixth sequence of the P sixth sequences is a data sequence after two-times frequency-domain oversampling, and P is a positive integer; and
performing an inverse Fourier transform on the N second sequences and the P sixth sequences together to obtain the time-domain data sequence.

28. The method according to claim 25, wherein the performing the inverse Fourier transform on the N second sequences to obtain the time-domain data sequence comprises:
arranging the N second sequences in rows to obtain a data matrix;
extracting a plurality of seventh sequences from the data matrix in columns, wherein each seventh sequence of the plurality of seventh sequences includes N data;
performing an inverse Fourier transform on the plurality of seventh sequences respectively to obtain a plurality of time-domain data subsequences; and
forming the time-domain data sequence with the plurality of time-domain data subsequences.

29. The method according to claim 28, wherein the time-domain data sequence is formed by concatenating the plurality of time-domain data subsequences.

30. The method according to claim 28, wherein a concatenation interval between two of the time-domain data subsequences is half a length of the time-domain data subsequence.

31. The method according to claim 1, wherein before the transmitting the time-domain data sequence on the transmission resource for the data to be transmitted, the method further comprises:
performing a filtering operation and/or a windowing operation on the time-domain data sequence, wherein the filtering operation is single-phase filtering or polyphase filtering.

32. The method according to claim 1, wherein the data to be transmitted includes modulated data and/or reference signal data.

33. The method according to claim 32, wherein in a case where the data to be transmitted includes the reference signal data, the N first sequences carry the reference signal data.

34. A communication apparatus, comprising: a memory and a processor; wherein the memory and the processor are coupled to each other; the memory is configured to store instructions executable by the processor; the processor, upon executing the instructions, performs the method according to any one of claims 1 to 33.

35. A computer-readable storage medium, wherein the computer-readable storage medium is stored with computer instructions, the computer instructions, upon being executed on a communication apparatus, enable the communication apparatus to perform the method according to any one of claims 1 to 33.
